# EUROPEAN PATENT SPECIFICATION

(11) **EP 0 757 820 B1**
(45) Date of publication and mention of the grant of the patent: **26.07.2000**
(21) Application number: 95917188.5
(22) Date of filing: 26.04.1995
(51) Int. Cl.: G06F 17/60

(54) **METHOD AND APPARATUS FOR ELECTRONICALLY CLEARING AND PROCESSING BAR-CODED DISCOUNT COUPONS**
VERFAHREN UND GERÄT ZUM ELEKTRONISCHEN VERGÜTEN UND VERARBEITEN VON STRICHKODIERTEN RABATTMARKEN
PROCEDE ET APPAREIL DE VALIDATION ET DE TRAITEMENT DE BONS DE REDUCTION A CODES A BARRES

(30) Priority: 29.04.1994 US 234998
(43) Date of publication of application: 12.02.1997
(73) Proprietor: CATALINA ELECTRONIC CLEARING SERVICES, ICN., St. Petersburg, FL 33716 (US)
(72) Inventor: GRANGER, Daniel, D., San Clemente, CA 92672 (US); MAXWELL, Robert, L., St. Petersburg, FL 33711 (US)
(74) Representative: Molyneaux, Martyn William
(86) International application number: US9505243
(87) International publication number: WO9530199

(56) References cited:
- EP-A- 0 173 835
- GB-A- 2 189 064
- GB-A- 2 264 185
- US-A- 4 791 281
- US-A- 5 008 519

## Description

### BACKGROUND OF THE INVENTION

This invention relates generally to systems for processing bar-coded discount coupons of the type used to promote retail sales, such as in supermarkets. More particularly, the invention relates to systems for "clearing" such coupons, i.e., ensuring that each coupon collected by a retailer from a customer results in an agreed payment to the retailer from the manufacturer that produced the coupon, and deriving information from the coupon to include in reports to the manufacturer. Each retailer who collects a coupon from a customer is promised, usually on the face of the coupon, to be reimbursed for the amount of the discount, plus a small handling fee. Discount coupons are widely used in the retail grocery business, as well as in other retail businesses, to encourage customers to purchase advertised items or, in some cases, to encourage customers to switch from one brand to another of a product that they have already purchased. Coupons may be distributed as "free standing inserts" (FSIs) with newspapers and magazines, or by direct mail. Coupons may also be distributed as store hand-outs, enclosed in product packaging, or printed at the cash register for immediate distribution to customers. All coupons have basically the same purpose: to provide a discount on a selected product or group of products on a subsequent visit, or sometimes during the current visit, to the store. Most coupons currently distributed have bar codes imprinted on them to facilitate processing in the store and at other locations in which processing takes place.

Present-day methods of processing discount coupons are deficient in two major respects. First, the techniques used for counting the coupons and paying the retailers are inefficient, slow and costly. Second, processing of the coupons does not provide the manufacturers with timely reports on the effectiveness of promotions and coupon deals that have been launched. Without such reports, manufacturers and retailers have insufficient information with which to plan or modify the promotions in an effort to reach their desired marketing goals.

The conventional approach to coupon clearing involves a number of independent and repetitive coupon counting steps. First, the coupons are counted and tabulated in each retail store, which may or may not perform some type of coupon validation process. Fraudulent coupon redemption (misredemption) is a critical concern both for retailers and for manufacturers. One type of fraudulent redemption occurs when customers present coupons without making a required product purchase, or present coupons that have already expired. When a customer accidentally presents an invalid coupon for redemption (sometimes referred to as coupon malredemption), this should be detected at the point of sale. However, manual verification of each coupon's validity would slow the store's operations. Therefore, stores often use software to validate discount coupons automatically. Unfortunately, most in-store scanning equipment presently available is incapable of reading coupon bar codes that completely define the terms of the discount being offered by the coupon. In any event, after the coupons have been counted in the retail store, they are physically transported to the retailer's headquarters, or to some intermediate collection site. There, the coupons are consolidated with coupons from other stores, and some type of reconciliation is performed to account for all the coupons collected. Once this stage of processing is reached, however, it is virtually impossible to associate a coupon with its original transaction in the store. The coupons are, in many respects, treated like cash and there is no audit trail linking an individual coupon back to the corresponding transaction in which the coupon was redeemed. Each retailer then sends the coupons to a retailers' clearing house, where the coupons are counted again and sorted by manufacturer. Reports are generated itemizing the amounts due to the various retailers from the various manufacturers. The coupons are then sent to a manufacturers' clearing agent, who again counts the coupons and communicates back and forth with the retailers' clearing house to reach agreement on the coupon counts. The retailer typically demands and receives payment based on the retailer's coupon count, but the subsequent coupon counts are inevitably different. The retailers' clearing house and the manufacturers' clearing agent may issue charge-back notices to the retailers, and consequently all the parties involved have a difficult time reconciling their respective accounting systems. To further complicate the accounting, retailers will typically make offsets or deductions from their regular payments to manufacturers, to compensate for payments not yet received for coupon collections.

Because this clearing process requires the coupons to be counted as many as three or four times, there are almost always discrepancies in the counts, and then a subsequent need for charge-backs and adjustments. These transactions often strain relations between retailers and manufacturers, and are the principal reason for the existence of retailers' clearing houses and manufacturers' clearing agents.

In addition to the misredemption and malredemption problems referred to above, there are two type of fraudulent misredemption that are difficult to detect with the use of conventional coupon clearing approaches. One type of misredemption occurs when coupons are injected into the clearing process independent of sales transactions. For example, a retailer may simply add a bundle of coupons (from some other source) to the coupons to be counted and submitted for payment by the manufacturer. Another type of fraudulent misredemption occurs when a criminal sets up a completely fake retail store operation, i.e., sells nothing but declares himself to be a retail store, then submits coupons for payment. Conventional coupon clearing approaches cannot detect this type of activity except by establishing a list of legitimate retailers and periodically checking the stores for legitimacy.

Another major drawback of present-day techniques for processing discount coupons is that information pertaining to the redemption of the coupons is not made readily available to the manufacturers. Timely, accurate and reliable redemption information is essential for the manufacturers. Without it, manufacturers cannot project financial liability for unredeemed coupons, and cannot accurately schedule production for distribution of their products to support an advertising campaign that uses coupons. Further, and perhaps most importantly, manufacturers need timely coupon redemption reports in order to gauge the effectiveness of their sales promotion or advertising campaigns. Some of the coupon validation information needed by the manufacturers is contained in coupon bar codes that are not able to be scanned by in-store scanning equipment. These additional bar codes are referred to as add-on codes or suffix codes, which present-day in-store scanners cannot process. Other information, contained in conventional bar codes that are presently scannable in stores, would also be of use to the manufacturers but is not presently made available in a timely manner. As a result, manufacturers must frequently analyse and revise their sales promotions with late or insufficient data.

It will be appreciated from the foregoing that there has been a long-felt need in the retail sales field for a new technique for clearing and processing discount coupons. Ideally, any new technique should clear and process coupons much more efficiently than prior methods and should provide more timely reports to manufacturers. The present invention fulfils this need.

The foregoing difficulties are alleviated to a certain extent by US-A-5008519. This reference discloses a coupon having Universal Product Codes (UPC) and incorporating special bar code indicia redeemable on up to three families of product. At a store, a scanner equipment verifies that the consumer did, in fact, purchase the items specified, that the coupon has not expired and a validation of the code. However, the reference provides only a preliminary validation of the coupons at the point of sale and improved validation is desirable together with the provision of an audit trail.

### SUMMARY OF THE INVENTION

According to a first aspect of this invention there is provided a method as claimed in claim 1 herein.

According to a second aspect of this invention there is provided an apparatus as claimed in claim 9 herein.

The present invention resides in a method and apparatus for clearing and processing discount coupons electronically. Briefly, and in general terms, the method of the invention comprises the steps of scanning coded discount coupons presented by customers in a retail store, to extract coupon data, including data identifying a product or product category for which each coupon may be used and data defining the value of each coupon, wherein the scanning step is performed as part of a purchase transaction; and then, validating each coded discount coupon immediately after the scanning step. The method further includes the steps of storing data pertaining to the coupon redemptions electronically in the store; and transmitting the stored coupon data from time to time to a computer at a central site administered by an independent coupon processing agent. At the central site, the steps of the method include receiving coupon data from multiple retail stores; processing the coupon data to yield timely manufacturer and retailer invoices and reports; and effecting payment of the retailers by manufacturers for redeemed and validated coupons. The invention provides for virtually automatic payments to the retailers based on an electronic coupon count and only a single physical coupon count, and using an extremely robust validation procedure in the stores and at the central coupon processing site. The method of the invention eliminates charge-backs to retailers and offsets to manufacturer invoices for shipments of products to the retailers.

More specifically, the method further includes the steps of transporting the original coupons to a coupon audit center after validation in the retail stores; and auditing a selected percentage of coupon redemptions by comparing selected original coupons with corresponding coupon data stored at the central site. In the presently preferred embodiment of the invention, the step of transmitting coupon data to the central site includes transmitting all sales transaction data pertaining to each sales transaction in which a coupon was presented for validation. The method further comprises the step of further validating coupons at the central site, by comparing coupon data with its related sales transaction data and matching a family code field included in the coupon data with a purchased item identified in the sales transaction data and having the same family code. To ensure access to a reliable database of family codes, the invention further includes the steps of establishing and maintaining a database of family codes at the central site; and periodically transmitting updates to the family code database to retail stores, to reduce misredemption rates in the validation of coupons at the retail stores. More specifically, the step of maintaining the database of family codes includes receiving family code updates from manufacturers, retailers and independent sources; locating possible family code errors during the step of validating the coupons at the central site; analyzing the family code updates and possible errors for consistency; and updating the family code database at the central site to provide a highly reliable database for ongoing coupon validation in the retail stores and at the central site.

In accordance with another aspect of the invention, the step of scanning coded discount coupons further includes scanning additional codes on the coupon to extract data pertaining to conditions of use of the coupon and other data inserted by the manufacturer to identify the coupon. The step of processing the coupon data at the central site further includes generating reports for manufacturers based on data recovered from the additional codes on the coupons. More specifically, the step of processing the coupon data at the central site further includes processing an offer code derived from the additional codes on each coupon; and generating reports based on the offer code data.

Additional steps in the processing of the coupon data at the central site include further validating the coupon data based on the offer code on each coupon, accumulating data relating to coupons invalidated as a result of information contained in the offer codes, and adjusting billing invoices and reports to reflect invalidated coupons.

In accordance with yet another aspect of the invention, the scanning step includes scanning additional codes on the coupon to extract data pertaining to conditions of use of the coupon and other data inserted by the manufacturer to identify the coupon; and the method further includes detecting a triggering code in the additional data, and generating a printable coupon based on the detection of a triggering code in the additional data.

In terms of novel apparatus for clearing and processing discount coupons, the invention comprises a scanner for scanning coded discount coupons presented by customers in a retail store, to extract coupon data, including data identifying a product or product category for which each coupon may be used and data defining the value of each coupon, wherein the scanning step is performed as part of a purchase transaction; and, in one embodiment of the invention, means for validating each coded discount coupon immediately after the scanning step. The apparatus further includes means for storing data pertaining to coupon redemptions electronically in the store; and a communications link for transmitting the stored coupon data from time to time to a computer at a central site administered by an independent coupon processing agent. Apparatus at the central site includes a communications module for receiving coupon data from multiple retail stores; means for processing the coupon data to yield timely manufacturer and retailer invoices and reports; and means for effecting payment of the retailers by manufacturers for redeemed and validated coupons. The apparatus may also be defined in more specific terms similar in scope to the method described above.

It will be appreciated from the foregoing that the present invention represents a significant advance in the field of coupon processing in the retail sales field. In particular, the invention provides a new way of processing discount coupons that requires only a single physical coupon count, but automatically and reliably effects payments of retailers for the collection and handling of manufacturers' coupons. Potential disagreement over multiple physical counts is avoided because the system of the invention provides a reliable audit trail to provide auditing against any selected percentage of the physical coupons. In addition, the system of the invention provides timely reports of coupon usage to the originating manufacturers, including reports of misredemption rates and reports of coupon effectiveness. Other aspects and advantages of the invention will become apparent from the following more detailed description, taken in conjunction with the accompanying drawings.

### BRIEF DESCRIPTION OF THE DRAWINGS

FIGURE 1 is a diagrammatic view showing the principal components of the electronic coupon clearing system of the invention;
FIGS. 2A is a flow diagram showing the functions performed in creation and distribution of coupons, and the coupon-related functions performed in a retail store during and after a sales transaction;
FIG. 2B is a flow diagram showing the coupon-related functions performed daily in a retail store and in a coupon processing center;
FIGS. 3A and 3B are flow diagrams showing the functions performed in relation to coupon auditing, principally in a coupon audit center;
FIG. 4 is a flow diagram showing the functions performed in the coupon processing center in relation to manufacturer billing and reporting;
FIG. 5 is a flow diagram showing the functions performed in processing accounts receivable for coupon billing;
FIG. 6 is a flow diagram showing the functions performed in processing retailer payments and reporting;
FIG. 7 is a flow diagram showing the functions performed in processing accounts payable for coupon billing;
FIG. 8 is a flow diagram showing the functions performed weekly and monthly at the coupon processing center, to provide reports after analyzing accumulated coupon data;
FIG. 9A and 9B are flow diagrams showing the functions performed at the coupon processing center to establish and maintain a Family Code database; and
FIG. 10 is flow diagram showing the functions performed at the coupon processing center in processing Offer Code data derived from scanned coupons.

### DESCRIPTION OF THE PREFERRED EMBODIMENTS

As shown in the drawings for purposes of illustration, the present invention pertains to a system for clearing and processing discount coupons electronically. A primary goal of the system of the invention is to avoid the inefficiencies associated with previously used methods for clearing coupons and generating reports from the information they contain. Although various techniques have been proposed in the past for electronic validation of coupons, to minimize misredemptions at point-of-sale terminals, prior coupon clearing techniques still rely on making multiple counts of paper coupons, and on an elaborate system of charge-backs and invoice offsets to settle accounts between retailers and product manufacturers who issue coupons.

### Overview:

In accordance with the invention, coupons are scanned at the retailer's point-of-sale (POS) terminals and information obtained during the scan is used to clear the coupons electronically, without a continuing need to count the coupons at each stage of processing. A key element in the coupon processing method of the invention is that data pertaining to scanned coupons in each retail store are gathered and processed by an independent coupon processing agency, i.e., independent of both retailers and manufacturers. The independent coupon processing agency performs some processing of coupon data in each retail store, before transmitting the coupon data to a central processing site on a regular basis, such as daily. Then, at the central site, the coupon processing functions performed include the generation of timely billing statements and reports to manufacturers and retailers. A selected percentage of the physical (paper) coupons is used to audit the coupon data stored electronically at the central site. Auditing can be random, or targeted to particular stores or POS terminals, based on statistical analysis of the coupon data for departures from normally expected data. By prior agreement, retailers and manufacturers accept the determinations of the independent coupon processing agency, so no charge-backs or invoice offsets are needed and accounting is greatly simplified for all the participating parties. In accordance with an optional feature of the invention, scanning coupons in the retail store includes scanning additional codes on each coupon, known as suffix codes or add-on codes. When suffix codes are included in a coupon database at the coupon processor's central site, additional reports can be generated using data from these codes. Although standard formats for suffix codes are still being formulated, it is certain that manufacturers will use them to encode additional information about the coupon, and about the source of the coupon, such as where it was printed and to which group of potential customers it was directed. With this information derived from redeemed coupons and provided in a timely manner, a manufacturer is better able to modify, or even terminate, advertising promotions and coupon deals.

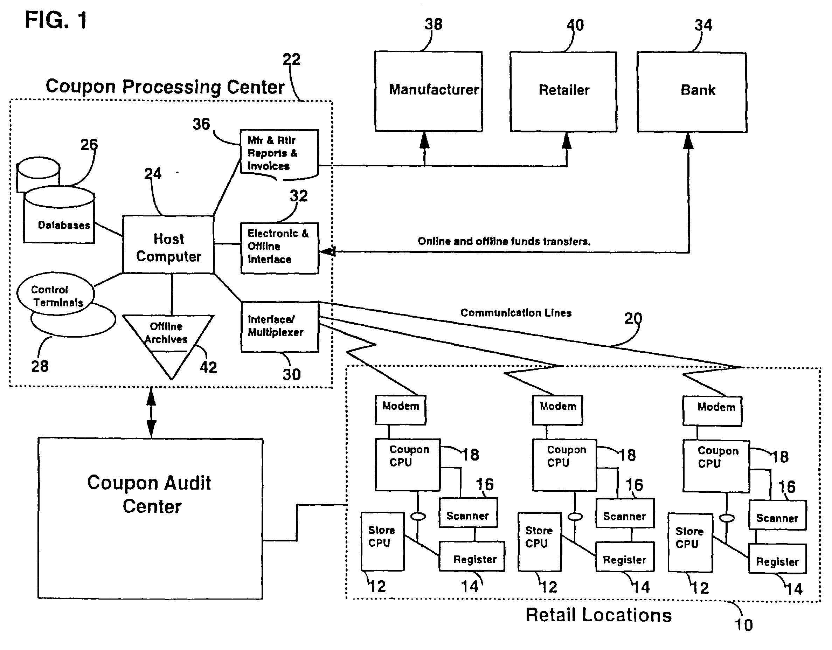

The relationships described above are depicted in general form in the block diagram of FIG. 1. Shown in the lower right portion of the figure are a number of retail locations, indicated generally by reference numeral 10. Three retail stores are shown, each having a conventional store central processing unit (CPU) 12, which typically controls multiple POS registers or terminals 14 with an identical number of scanners 16. As is well known, products being purchased by a customer are passed over one of the scanners 16, which reads a bar code imprinted on the product, the bar code being known in the retail trade as the uniform product code (UPC). In a normal sales transaction, the POS terminal 14 and the store CPU 14 cooperate to identify the products being purchased, to effect printing of a customer receipt and keeping a complete record of the transaction. The same scanner 16 can be used to scan coupons presented for redemption by a customer and to transmit the coupon data to a coupon central processing unit (CPU) 18 in the store. As will be described, a first stage of coupon processing takes place in the coupon CPU 18. Periodically, each coupon CPU 18 transmits batched coupon data over communication lines 20 to a coupon processing center 22, where the principal coupon processing functions are performed.

The coupon processing center 22 includes another CPU 24, which is preferably a fault-tolerant CPU, using multiple-redundancy of processing units and other components to minimize the possibility of on-line failure. The fault-tolerant CPU 24 communicates with disk storage devices in which coupon databases 26 are created and maintained, control terminals 28, a communications interface 30 for connection to the communication lines 20, and appropriate interfaces 32 for communicating with a bank 34 or other financial institution to perform electronic funds transfers (EFT). The coupon processing center 22 generates manufacturer and retailer reports and invoices, indicated at 36, for transmission to manufacturers 38 and retailers 40. The coupon processing center 22 also maintains off-line archives 42 of coupon data by periodically purging the on-line coupon databases 26.

The paper coupons redeemed in the stores 10 are sent to a coupon audit center 46, which may or may not be located near the coupon processing center 22. Selected coupons are audited in the coupon audit center. That is to say, the physical coupons are compared with electronic data pertaining to the corresponding sales transactions, transmitted over a communications link 48 between the coupon processing center 22 and the coupon audit center.

### Coupon Processing Details:

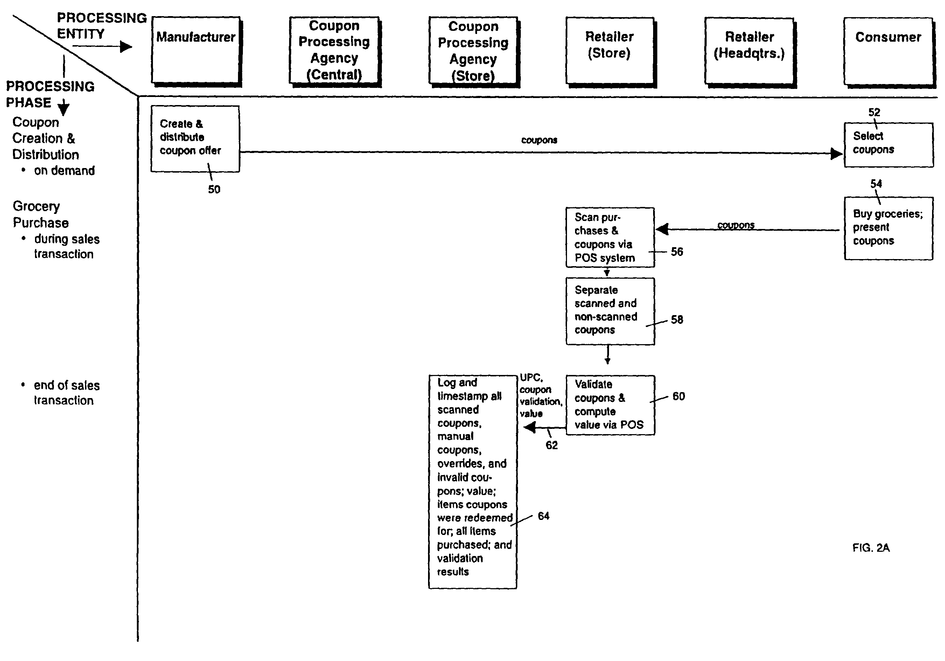

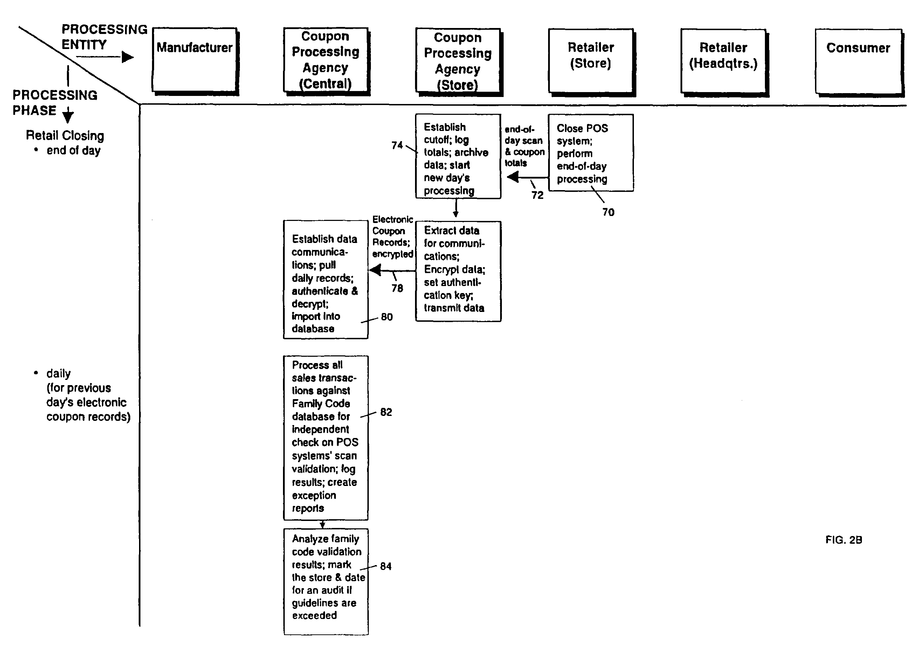

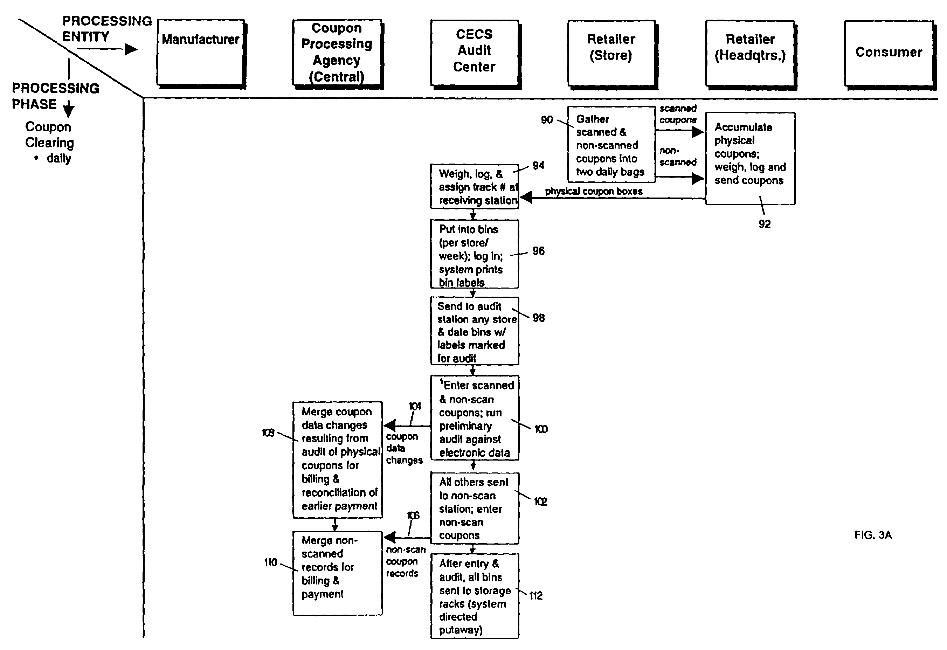

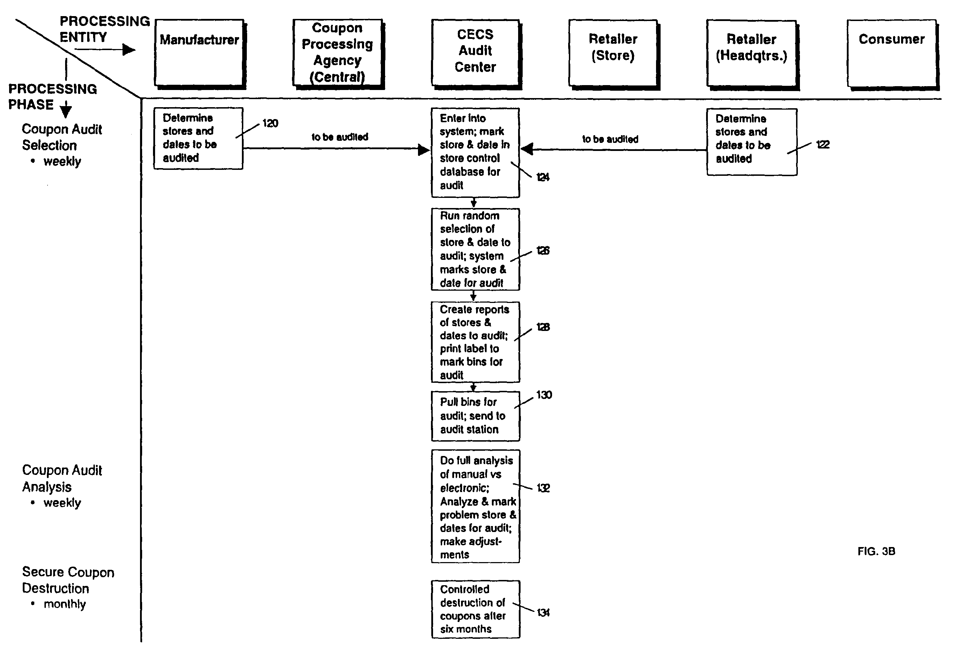

FIGS. 2-10 are flow diagrams depicting coupon processing at each phase of a coupon's life. Because the various functions are performed by different processing entities in different locations, it is convenient to illustrate the functions in the form of tabular flow diagrams. Across the top of each diagram are column headings indicating the processing entity that performs the functions, if any, described in the respective columns. The processing entities include the manufacturer, the independent coupon processing agency, the retailer, and the customer. In addition, there are columns for subentities because some entities perform processing in more than one location or type of location. Thus, there is an entity column for "Retailer (Store)" and another for "Retailer (Headquarters)." Similarly the independent coupon processing agency has entity columns for "Coupon Processing Agency (Store)," "Coupon Processing Agency (Central)" and "Coupon Processing Agency (Audit Center)." The rows of each tabular diagram indicate times or phases of coupon processing. Thus, for example, in the first retail store coupon processing diagram (FIG. 2A) there are separate "rows" for "coupon creation and distribution," "grocery purchase, during sales transaction," "grocery purchase, end of sales transaction" and "retail closing, end of day." For each processing phase, the functions, if any, performed by each processing entity are detailed in the appropriate column. The phases of processing are further separated into broad functional categories and illustrated in separate figures, such as "retail store processing" (FIGS. 2A and 2B) and "audit center processing" (FIGS. 3A and 3B). It will be appreciated that, because there is interaction and communication among the various processing entities, it is difficult to describe the entire coupon process without a diagramming tool of the type used here. The diagrams necessarily make some simplifications for the purpose of clarity of explanation, but it is believed that the functional flow diagrams provide sufficient detail to allow programmers of ordinary skill, and some knowledge of the retail sales business, to generate the program code needed to perform the coupon processing functions of the invention.

### Retail Processing:

FIGS. 2A and 2B together show coupon processing from creation and distribution to daily processing by the independent coupon processing agency. In FIG. 2A, the first phase is coupon creation and distribution, indicated at block 50 as performed by the manufacturer. As indicated in block 52, the consumer or customer selects which of the distributed coupons will be used in purchase transactions. It will be understood that various techniques are used to place coupons in the hands of the customer, including, but not limited to, direct mail, inserts in newspapers and magazines, grocery package inserts, and printing coupons for immediate distribution at the point-of-sale (POS). The invention is intended to handle coupons distributed by all or any of these distribution methods.

On a visit to the retail store, the customer buys selected grocery or other items and presents them for checkout, together with selected discount coupons, as indicated at 54. During each sales transaction, the retailer (in-store computer 12, FIG. 1) scans the customer purchases and coupons using the POS scanner 16 and in-store computer 12. The sales clerk may have to separate scanned and non-scanned coupons into separate stacks, as indicated at 58. At the present time more than 90% of coupons are scannable. The remainder are not, either because they do not have bar codes or because the bar codes are not readable. For the unreadable coupons, the checker may be able to enter the information by hand through a keypad. For the most part, however, the unscannable coupons cannot be processed by the invention and will be handled in accordance with normal industry practices.

The next significant event in the sales transaction is the end of the transaction, as signaled by the sales clerk through the keypad. At this point the in-store computer 12 performs a preliminary coupon validation, as indicated at 60, on all the coupons that were presented, and computes a discount value. Validation software for this purpose is commercially available from a number of sources and is a preferred first step in the method of the invention. However, as will be explained, a comprehensive validation process is performed at the coupon processing center 22, so in-store validation is not essential to the invention. The next processing step is performed by the coupon processing computer 18 in the retail store. After validation of the coupons, data pertaining to the coupon redemptions are transmitted to the coupon processing computer 18, as indicated at 62. The latter computer, which is operated strictly under the control of the independent coupon processing agency, performs the coupon processing functions described in block 64. Specifically, all scanned coupons are logged and time-stamped to initiate an audit trail for the coupon redemption transaction. Similar entries are created for coupon "overrides," manually entered coupons, and invalid coupons. "Overrides" arise when a sales clerk gives a discount to the customer in spite of an indicated error in the coupon during validation. The clerk may override the error indication because of the busy condition of the checkout line, or to avoid or settle a confrontation with the customer, or for other reasons. The clerk is required to enter a code that indicates the reason for each override, and the override codes also become part of the record logged by the coupon processing agency's in-store computer. In addition to the validation results, the computer records the value of each redeemed coupon, the value of the items that the coupons were redeemed for, and the value of all the items purchased in the transaction. Sales data may also be recorded for all of the items, or for selected items, purchased in the transaction.

At the end of each business day, the retailer in each store closes the POS system and performs routine end-of-day processing, as indicated in block 70. End-of-day scan and coupon totals are transmitted to the coupon CPU, as indicated at 72. Then the coupon CPU performs its own end-of-day processing, establishing a cutoff of data accepted from the store POS terminals, archiving the completed day's data, and initializing operations to begin a new day's processing, as indicated in block 74. Next, the coupon CPU in the store extracts data from the day's archives for transmission to the coupon processing center. Preferably, this step (depicted in block 76) includes encryption of the data before transmission to the coupon processing center, as indicated at 78.

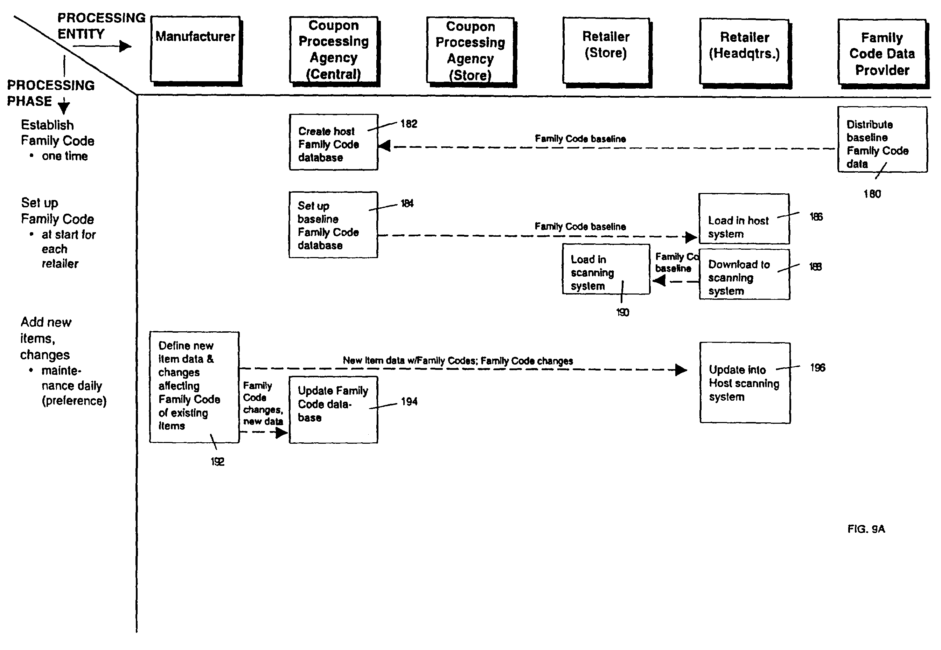

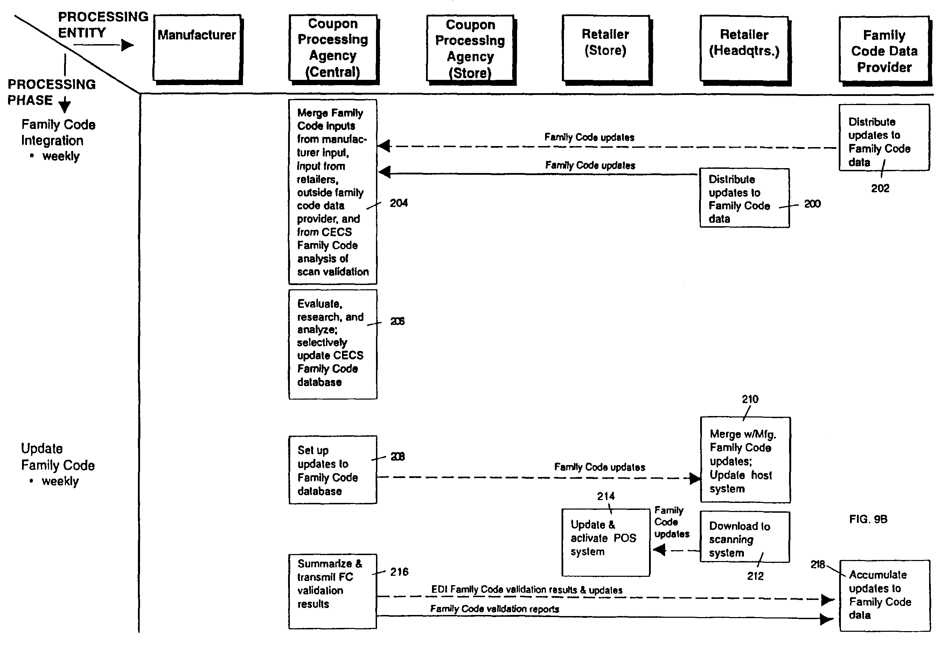

At the coupon processing center, the received coupon records are authenticated and decrypted; then stored in the coupon record database, as indicated in block 80. Also on a daily basis, but only after all the coupons have been received from multiple store locations, the central coupon processing computer performs a validation check of all sales transactions in the daily data, using an accurate Family Code database maintained as described below with reference to FIGS. 9A and 9B. The Family Code for each product is a field of the Uniform Product Code for coupons, and is part of each coupon record transmitted from the retail locations. The Family Code identifies the product at least down to a level of product type, but may not necessarily be specific as to designations of size and other factors. Family codes are assigned by manufacturers to designate their products. The coupon is also bar-coded with a manufacturer's identification code, so the Family Codes may differ from one manufacturer to another. The Family Code is described in more detail below, but for the moment it is sufficient to understand that the Family Code on a coupon is intended to identify the item to which a discount applies. A key element of coupon validation is the matching of the Family Code on the coupon with a Family Code of a purchased item. This is done initially in the retail store, but an inherent weakness of all in-store coupon validation schemes is the existence of inaccuracies in the Family Code database used in the store for this matching process. One of the advantages of the present invention is that an extremely accurate Family Code database is maintained at the coupon processing center. This allows the independent coupon processing agency to perform a separate and independent coupon validation on all coupon records received from the retail stores. The results of the validation are logged and exception reports are created as needed. This independent Family Code check is described in block 82.

Once the Family Code check has been completed, the results are analyzed, as indicated in block 84, for possibly questionable rates of invalid coupon redemptions. Guidelines for acceptable rates of misredemptions may be set by the independent coupon processing agency, or by individual retailers, and if the guidelines are exceeded, individual stores, or POS terminals within store, or individual sales clerks, may be targeted for auditing.

### Audit Center Processing:

FIGS. 3A and 3B show the steps that are performed, principally at the coupon audit center, for auditing a selected proportion of paper coupons against the electronic records of the coupon redemptions. Each retail store gathers scanned and non-scanned coupons into two daily bags of coupons, as indicated in block 90, and transports them periodically to the retailer's headquarters, where, as shown in block 92, the coupons are accumulated, logged, weighed, packed in boxes and transported to the coupon audit center. At the audit center, as indicated in block 94, arriving blocks are again weighed (for an approximate coupon count) and assigned a tracking number to assist in subsequent tracing of the coupons if needed. Next, the coupons are sorted into bins, with one bin per store per week. The coupons are logged in as they are placed into the bins, and bin labels are printed, as indicated in block 96. Later, bins with labels marked for audit are sent to an audit station, as indicated in block 98. Selection of bins for audit can be based on stores and dates selected as a result of the validation check done on the electronic coupon records in the coupon processing center, or may be a random selection. On occasion, such as during start-up testing, it may be necessary to perform a full (100%) audit in which all coupons are compared with the electronic coupon records.

Coupons selected for audit are entered into an audit center computer (not shown) and a preliminary comparison is made, as indicated in block 100, between the physical coupons and corresponding electronic coupon data obtained from the database maintained at the coupon processing center. Each physical coupon can be identified as to the date it was redeemed, the store it was redeemed in, and even the POS terminal that scanned it, so corresponding coupon and sales transaction data can be located in the coupon database. Non-scanned coupons are also entered into the audit center computer, as indicated at 102. Any changes in the electronic coupon data, based on the results of the preliminary audit, are transmitted to the coupon processing center, as indicated at 104 and 106. Then the coupon data changes for both scanned and non-scanned coupons are merged with the database, as indicated at 108 and 110. After entry and audit, all coupon bins are sent to storage racks, as indicated in block 112.

FIG. 3B shows the functions performed on a weekly basis at the audit center. Manufacturers and retailers may elect which stores and dates are to be audited, as indicated in blocks 120 and 122. This information is entered into the audit system (block 124). In addition, the audit system performs a random selection of stores and dates to audit, as indicated in block 126. The system then creates reports of stores and dates to audit and prints labels to identify bins for audit, as indicated in block 128. The marked bins are retrieved from their storage racks and sent to an audit station (block 130), and then a full audit analysis is performed, comparing the physical coupons with the electronic coupon records, as indicated in block 132. Adjustments may need to be made to manufacturers' and retailers' statements as a result of the full audit analysis. Also as a result of the analysis, stores with coupon processing problems may be identified.

Finally, as shown in block 134, the physical coupons are destroyed after a selected time, such as six months.

### Manufacturer Billing and Reporting:

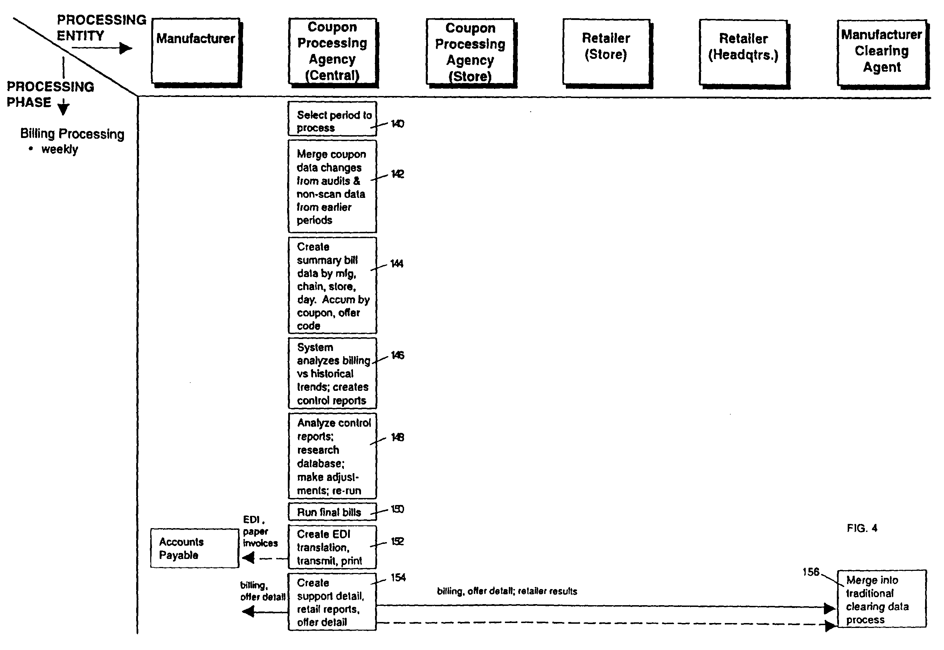

As shown in FIG. 4, billing of manufacturers from the coupon processing center occurs on a weekly cycle. The functions performed by the coupon processing computer during this phase of coupon processing include selecting a period to process (block 140), merging coupon changes made as a result of audits against physical coupons (block 142), then, as shown in block 144, creating a summary bill by manufacturer, chain, store, and day, with accumulations by coupon and offer code on the coupon. The coupon processing center computer then analyzes the summary billing data as compared with historical trends and creates control reports (block 146). Then it analyzes the control reports, researches the database and makes any needed adjustments (block 148) before running the final bills (block 150). The bills may be sent to each manufacturer by electronic data interchange (EDI) or as paper invoices (block 152). Finally, the system creates detailed reports pertaining to the coupons redeemed for each manufacturer (block 154). These reports may be derived in part from suffix codes scanned on the coupons in the retail stores. The suffix code data is formatted in a manner not yet standardized, so analysis of these data must usually be left to the manufacturer. Alternatively, the manufacturer may provide the coupon processing agency with coding information pertaining to the suffix codes, allowing the analysis of suffix code data at the central site. As indicated in block 156, the billing, offer detail and retailer results may be transmitted to a manufacturer clearing agent, to be merged with the traditional coupon clearing process.

### Accounts Receivable and Accounts Payable Systems:

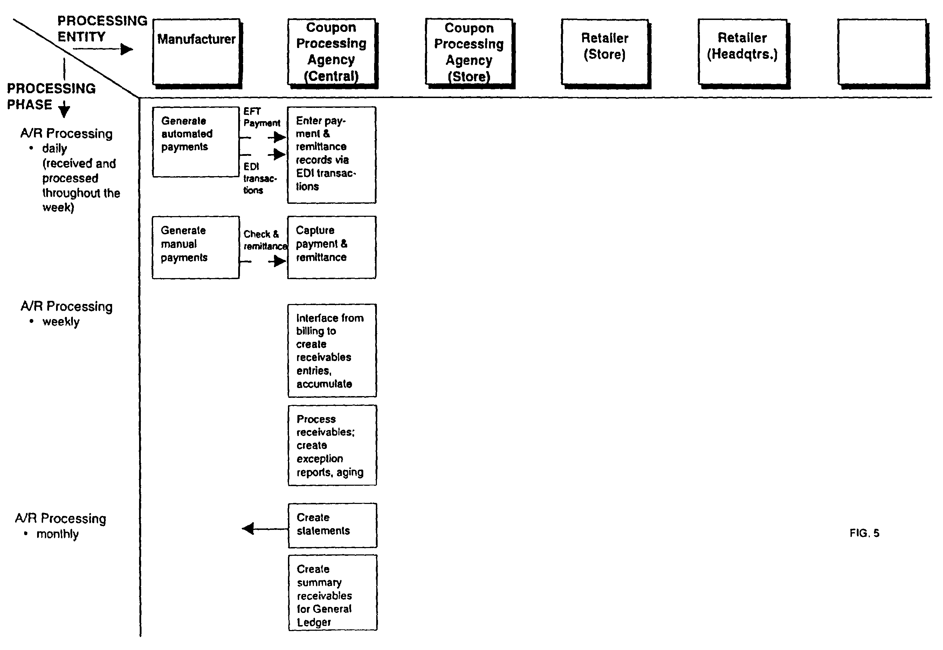

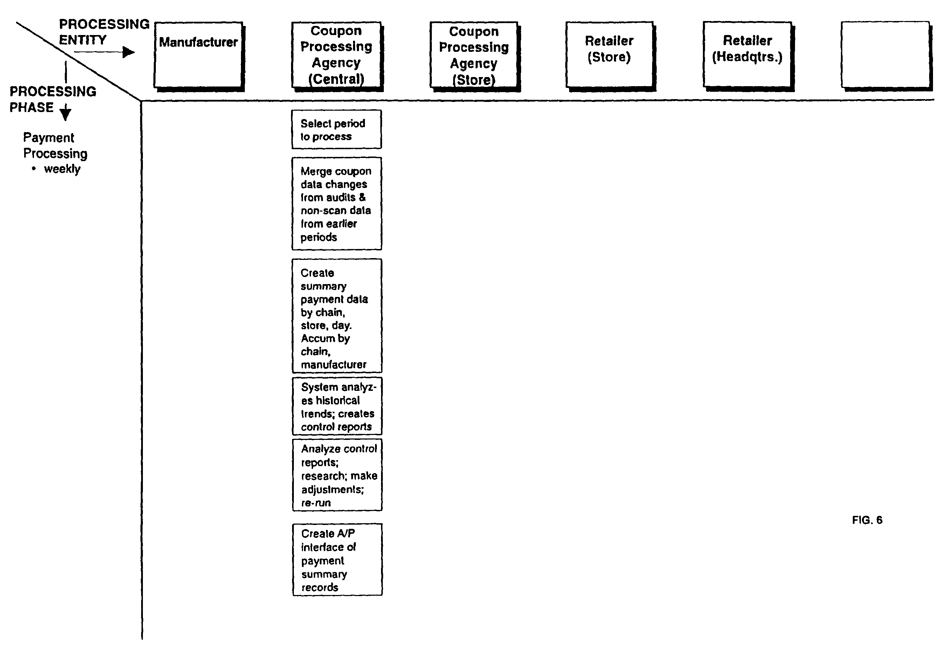

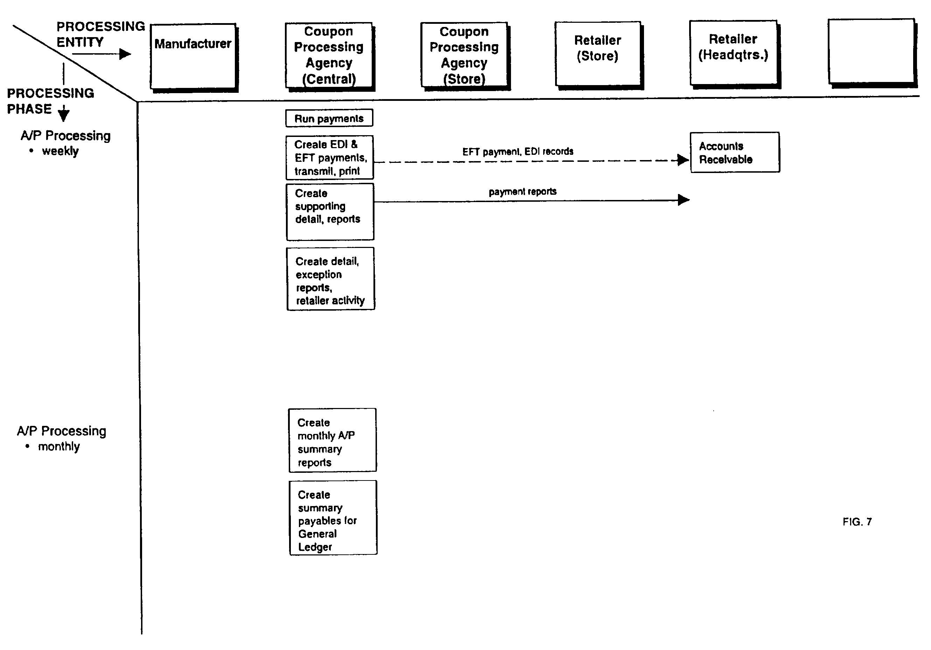

As shown in FIG. 5, the coupon processing center maintains a conventional accounts receivable system to process payments received from manufacturers and, as shown in FIGS. 6 and 7, an accounts payable system functions to process payment made to retailers. The functions performed in FIG. 6 parallel those performed in FIG. 4 for the generation of manufacturer bills, except that in FIG. 6 the result is the generation of accounts payable to the retailers. FIG. 7 includes the functions of a conventional accounts payable system. In brief, the coupon processing agency acts as a payment agent for both manufacturers and retailers, sending bills to manufacturers and forwarding payments to retailers. There are two alternative accounting approaches to handling the accounts receivable and the accounts payable. In one approach, the coupon processing agency pays the retailers promptly and bills the manufacturers at the same time. The accounts receivable from the manufacturers are then an asset of the coupon processing agency. In the other approach, the coupon processing agency simply acts as an agent for both parties, and the accounts receivable from the manufacturers are an asset of the retailers.

### Periodic Analysis and Reporting:

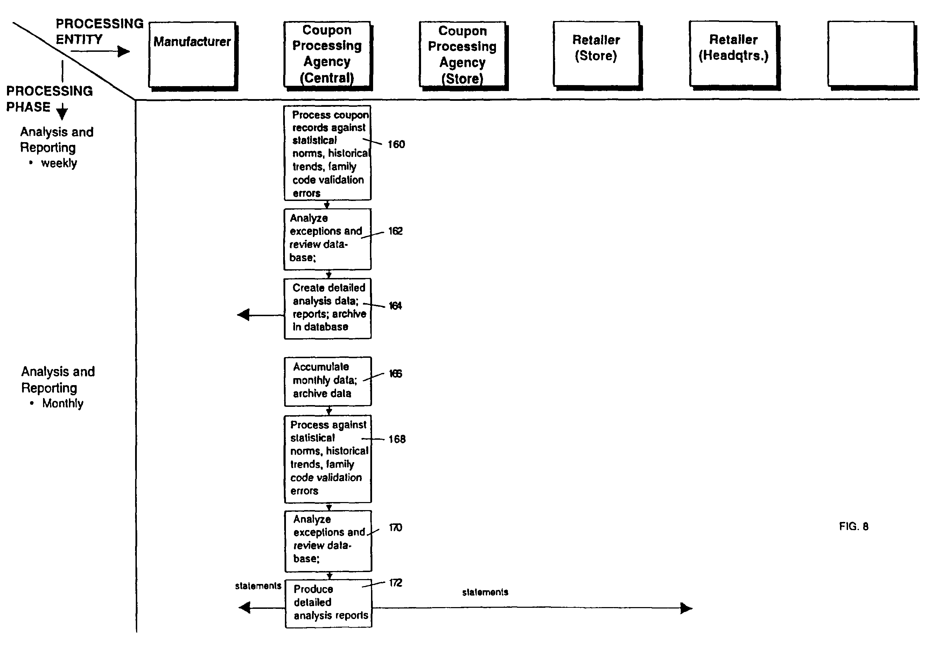

The coupon processing center also performs weekly and monthly analyses on the accumulated coupon data. As shown in FIG. 8 at block 160, in a weekly analysis the center processes coupon records against statistical norms, analyzes historical trends, and summarizes Family Code validation errors. As indicated in block 162, exceptions in the data are analyzed and then, as indicated in block 164, reports and detailed analysis data are transmitted to the manufacturers and archived in the coupon database.

Substantially the same functions are performed on a monthly basis, as indicated in blocks 166, 168, 170 and 172, with detailed analysis reports going to manufacturers and retailers.

### Family Code Subsystem:

As shown in FIGS. 9A and 9B, the coupon processing center maintains a Family Code database, in coordination with manufacturers and retailers. As mentioned above, the Family Code is an important tool for validation of coupons, both in the retail stores and in the coupon processing center. Family Codes are designated by each manufacturer, and maintaining an accurate and complete Family Code database of all manufacturers Family Codes is an important goal in coupon processing. Manufacturers are urged by grocery trade groups (e.g. in the publication *Trade Practice Recommendations for Grocery and Non-Food Products - 1990)* to periodically supply retailers with current and accurate lists of coupon Family Codes paired with appropriate UPC codes. In practice, these updates are not always as reliable as they should be. Independent Family Code providers alleviate this problem to some degree, and attempt to provide a reliable compilation of all Family Codes to retailers. In accordance with one aspect of the present invention, the coupon processing center maintains a Family Code database that has been "cleaned" of possible errors by comparing and merging database changes derived from manufacturers, retailers and Family Code providers. More importantly, the coupon processing center can detect errors in the database during the coupon validation phase of processing.

The Family Code database is created initially in the coupon processing center from baseline data provided by a Family Code data provider, as indicated by blocks 180 and 182 (or alternatively from Family Codes provided by the manufacturers). When a new retailer joins the coupon processing system, the coupon processing center transmits a baseline Family Code database to the retailer headquarters, as indicated by blocks 184 and 186. The baseline database is then distributed to the various retail stores, as indicated in blocks 188 and 190. Additional Family Code entries and modifications to old entries are generated from time to time by manufacturers, as indicated in block 192. These are received at the coupon processing center and used to update the Family Code database, as indicated in block 194. The same changes are transmitted to the retailer headquarters' computers, where they are used to update the retailer's database, as indicated in block 196.

The Family Code subsystem in the coupon processing center performs an updating and analysis function weekly, as illustrated in FIG. 9B. Family Code updates are also transmitted from retailers and, optionally, from an outside Family code provider, as indicated in blocks 200 and 202. On a weekly basis, in the presently preferred embodiment of the subsystem, these updates, together with those received from manufacturers and those generated as a result of analysis of scan validation data at the coupon processing center, are merged together as indicated in block 204. Then the subsystem evaluates, researches and analyzes the updates and merges them selectively with the Family Code database, as indicated in block 206. Also on a weekly basis, the coupon processing center distributes updates of the Family Code to the retailer headquarters, as indicated in block 208. The retailer merges these updates with those received directly from the manufacturer, as indicated in block 210, then downloads the merged updates to the retail stores, as shown in block 212. Finally, the stores update the Family Code database in their POS computers, as indicated in block 214, and may also summarize and transmit the Family Code validation results to the Family Code provider, as shown in blocks 216 and 218. The Family Code subsystem of the coupon processing center provides a Family Code database that is regularly updated from all possible sources, and is regularly analyzed and evaluated to identify discrepancies and inaccuracies. The relatively "clean" Family Code database that results from this process provides a highly effective coupon validation tool for use both at the retail stores and in the coupon processing center.

### Processing Suffix Codes, Including Value Code:

The primary bar codes on a coupon are defined by a standard approved by the Universal Code Council (UCC) and include the following fields:
- Number system character:: 5 (for most coupons),
- Manufacturer's ID number:: unique identification for the manufacturer that issued the coupon,
- Family Code:: 3-digit code identifying an item or type of item to which the coupon discount applies,
- Value Code:: 2-digit code indicating the amount of the discount,
- Modulo Check Character:: a single digit that must be in a proper sequence to differentiate this coupon from other coupons issued at the same time and/or for the same item.

Some specific Value Codes indicate the number of cents off, such as 50 or 25, while others are true codes, such as 76 ($1.00 off) or 42 ("buy three, get $1.00 off). A complete list of Value Codes may be found in the *UPC Coupon Code Guidelines* *Manual*, available from the UCC.

It will be apparent that the information contained in the primary bar codes on the computer does not include the coupon expiration date. This and other information is contained in the suffix codes on the coupon. There is, as yet, no universal standard for the suffix code format. A proposed code format is defined by the UCC in a publication entitled *Coupon Extended Code*, published February 16, 1994 by the Uniform Code Council, Inc. 8163 Old Yankee Road, Dayton, Ohio 45458. The extended code is designated in that publication the UCC/EAN-128 Coupon Extended Code. The extended code includes the following field elements, which may be encoded in a variety of bar-code formats:
(1) The NSC (number system character) code. A one-digit element included in all coupon extended codes.
(2) The Offer Code. A five-digit element used by coupon issuers to code coupon offers.
(3) The coupon expiration date. The month and year of expiration in the format MMYY.
(4) The Household ID. An eight-digit element used by coupon issuers to identify a specific household.

The suffix codes cannot presently be read by most in-store scanners, although the technology is available to read the codes. One embodiment of the present invention depends on having the suffix codes available at the POS terminals in the retail stores. This can be accomplished by one of two approaches. In one approach, the presently used POS scanners can be upgraded to read the suffix codes as well as the primary codes, and to provide the suffix code data to the coupon CPU (18, FIG. 1). Alternatively, a new generation of scanners, soon to be widely available in stores, will be able to read the suffix codes along with the primary codes. The coupon CPU (18) can then obtain all of the coupon data, including suffix codes, from the "store loop," the communications path linking the POS terminals (14) and the store CPU (12).

By way of example, suffix codes may be read by scanning apparatus such as that described in United States Patent No. 5,,128,520 issued to Rando et al. and assigned to Spectra-Physics, Inc., of San Jose, California. United States Patent No. 4,879,456 issued to Cherry et al. and also assigned to Spectra-Physics, Inc., describes a system for decoding scanned bar codes or various types, including the UPC/EAN (Uniform Product Code and European Article Code), which may include suffix or add-on codes.

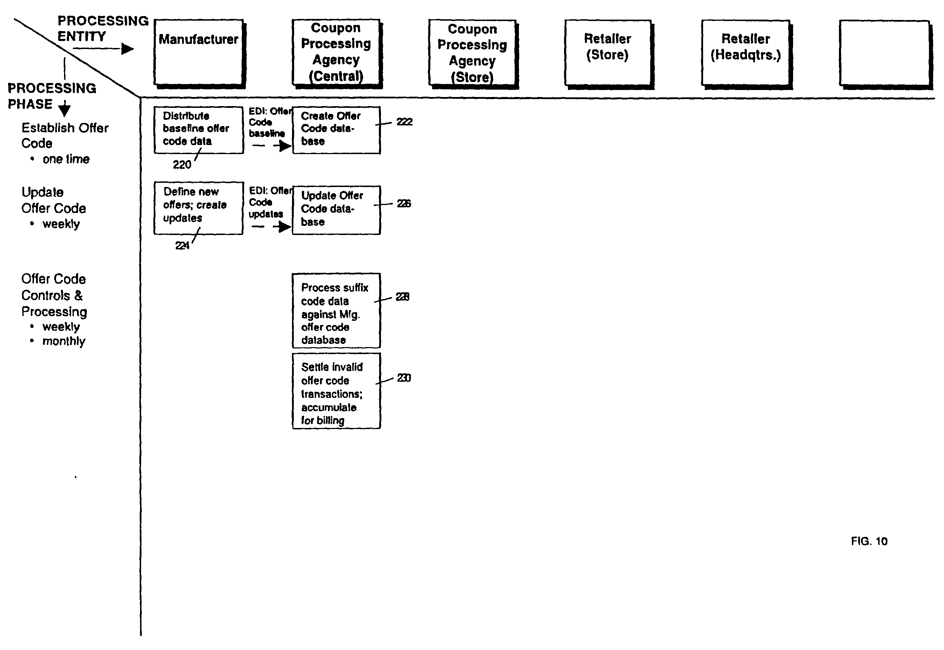

FIG. 10 shows the functions performed in processing Offer Code data at the coupon processing center. Offer Code data is initially transmitted to the coupon processing center from the manufacturer, to provide a baseline database of Offer Codes at the center. This is indicated in blocks 220 and 222. On a periodic basis, such as weekly, the manufacturer defines new offers and transmits updates to the coupon processing center, as indicated in blocks 224 and 226. Also on a periodic basis, the coupon processing center processes accumulated suffix code data against the Offer Code database for each manufacturer, as indicated in block 228.

At this stage of processing the suffix codes, the coupon processing center may detect invalid coupons, based on invalid Offer Code transactions. These are accumulated for billing adjustments, as indicated in block 228.

The Offer Code can be used by the manufacturer not only to define any special terms of the offer, but also to indicate where the coupon originated, whether distributed by direct mail, in a store or in product packaging. This information is obviously of enormous benefit to the manufacturer, especially if it can be made available on a timely basis. If a manufacturer does not make its Offer Code data available to the coupon processing center, then the center cannot process the suffix code data, except to the extent that various fields are recognized. In this case, the suffix code data may be shipped to the manufacturer, either in detail or by way of summaries by product or Family Code. Whether the suffix code processing is performed at the coupon processing center or by the manufacturer itself, the manufacturer obtains timely information about how various coupon offers are received in various locations and using various coupon distribution techniques. Use of the information allows the manufacturer to make meaningful and timely adjustments to an ongoing coupon promotion, or to discontinue it altogether.

Another important use for the Offer Code is to allow manufacturers to perform cost accounting down to a product level. Manufacturers would like to be able to determine accurately how much of a total promotion cost to allocate to various products covered by the promotion. That determination is based in pan on the redemption counts for the various products. In the past, coupon redemptions could only accounted for with any accuracy down to the Family Code level. However, the number of Family Codes available to a manufacturer is limited and the same specific Family Code may include multiple brand names, sizes or types of product made by the same manufacturer. Access to the Family Codes on the coupons provides the manufacturer with more accurate data for the desired cost accounting.

A manufacturer may optionally use suffix code data to trigger the printing of one or more additional coupons in the retail store. The mechanism for this is basically the same one described in United States Patent No. 4,723,212, issued to Mindrum et al. and assigned to Catalina Marketing International, Inc., except that printing of a coupon is triggered by the detection of a preselected code on a discount coupon rather than a preselected product code on a purchased item. The suffix code selected for triggering may be the Offer Code or any other field on the coupon, such as the Household ID, to permit printing a coupon for a target household. The mechanism may also be used to tie or cascade one coupon promotion to another.

### Conclusion:

It will be appreciated from the foregoing that the present invention provides a significant improvement in the way discount coupons are processed during and after redemption in a retail store. In particular, the invention provides a more efficient way to validate and clear coupons, generating automatic bills to the manufacturers and payments to the retailers, but with only a single count being taken of the physical coupons. In addition to providing an efficient clearing and payment process, the invention provides a much reduced level of coupon misredemptions by continually updating a Family File database for periodic distribution to the retailers. Finally, the invention in one of its embodiments provides suffix code data to the manufacturers, to further enhance the proportion of valid redemptions and to enable manufacturers to modify or terminate coupon promotions based on timely reports of the effectiveness of the promotions.

It will also be appreciated that, although the invention has been described in detail for purposes of illustration, various modifications may be made without departing from the scope of the invention. Therefore, the invention should not be limited except as by the appended claims.

## Claims

1. A method for clearing and processing discount coupons, comprising the steps of:
scanning coded discount (56) coupons presented by customers in a retail store (10), to extract coupon data, including data identifying a product or product category for which each coupon may be used and data defining the value of each coupon, wherein the scanning step is performed as part of a purchase transaction;
storing data (74) pertaining to coupon redemptions electronically in the store;
transmitting (80) the stored coupon data from time to time to a computer at a central site (22) administered by an independent coupon processing agent including transmitting (80) all sales transaction data pertaining to each sales transaction in which a coupon was presented;
at the central site (22), comparing coupon data with its related sales transaction data and matching a family code field included in the coupon data with a purchased item identified in the sales transaction data and having the same family code, and processing the coupon data to yield timely manufacturer and retailer invoices and reports;
transporting original coupons (92) to a coupon audit center;
auditing a selected percentage of coupon redemptions by comparing selected original coupons with corresponding coupon data stored at the central site; and
effecting payment (150) of the retailers by manufacturers for redeemed and validated coupons.

2. A method as defined in claim 1, and further comprising the steps of:
establishing and maintaining a database of family codes at the central site (22); and
periodically transmitting updates to the family code database to retail stores, to reduce misredemption rates in the step of validating coupons at the retail stores (10).

3. A method as defined in claims 1 or 2, wherein the step of maintaining the database of family codes includes:
receiving family code updates from manufacturers, retailers and independent sources;
locating possible family code errors during the step of validating the coupons at the central site (22);
analysing the family code updates and possible errors for consistency; and
updating the family code database at the central site (22) to provide a highly reliable database for ongoing coupon validation in the retail stores and at the central site (22).

4. A method as defined in any one of the preceding claims, and wherein each coded discount coupon is validated immediately after the scanning step.

5. A method as defined in any one of the preceding claims, wherein:
the step of scanning coded discount coupons further includes scanning additional codes on the coupon to extract data pertaining to conditions of use of the coupon and other data inserted by the manufacturer to identify the coupon; and
the step of processing the coupon data at the central site (22) further includes generating reports for manufacturers based on data recovered from the additional codes on the coupons.

6. A method as defined in claim 5, wherein the step of processing the coupon data at the central site (22) further includes:
processing an offer code derived from the additional codes on each coupon; and
generating reports based on the offer code data.

7. A method as defined in claims 5 or 6, wherein the step of processing the coupon data at the central site (22) further includes:
further validating the coupon data based on the offer code on each coupon;
accumulating data relating to coupons invalidated as a result of information contained in the offer codes; and
adjusting billing invoices and reports to reflect invalidated coupons.

8. A method as defined in any one of the preceding claims, wherein:
the scanning step includes scanning additional codes on the coupon to extract data pertaining to conditions of use of the coupon and other data inserted by the manufacturer to identify the coupon; and
the method further includes detecting a triggering code in the additional data, and generating a printable coupon based on the detection of a triggering code in the additional data.

9. Apparatus for clearing and processing discount coupons, comprising:
a scanner (16) for scanning coded discount coupons presented by customers in a retail store (10), to extract coupon data, including data identifying a product or product category for which each coupon may be used and data defining the value of each coupon, wherein the scanning step (56) is performed as part of a purchase transaction;
means for storing data (12) pertaining to coupon redemptions electronically in the store (10);
a communications link (20) for transmitting the stored coupon data from time to time to a computer at a central site (22) administered by an independent coupon processing agent including all sales transaction data pertaining to each sales transaction in which a coupon was presented;
at the central site (22), there being provided a communications module for receiving coupon data from multiple retail stores means for validating coupons, including means for comparing coupon data with its related sales transaction data and matching a family code field included in the coupon data with a purchased item identified in the sales transaction data and having the same family code, and means for processing the coupon data to yield timely manufacturer and retailer invoices and reports;
means for transporting original coupons to a coupon audit center after validation in the retail stores (10);
means for auditing a selected percentage of coupon redemptions by comparing selected original coupons with corresponding coupon data stored at the central site; and
means for effecting payment of the retailers by manufacturers for redeemed and validated coupons.

10. Apparatus as defined in claim 9, and further comprising:
means for establishing and maintaining a database (26) of family codes at the central site (22); and
means for periodically transmitting updates to the family code database to retail stores (10), to reduce misredemption rates in the step of validating coupons at the retail stores.

11. Apparatus as defined in claim 10, wherein the means for maintaining the database (26) of family codes includes:
means for receiving family code updates from manufacturers, retailers and independent sources;
means for locating possible family code errors during the step of validating the coupons at the central site (22);
means for analysing the family code updates and possible errors for consistency; and
means for updating the family code database at the central site to provide a highly reliable database for ongoing coupon validation in the retail stores (10) and at the central site (22).

12. Apparatus as defined in any one of claims 9 - 11, and further comprising:
means for validating each coded discount coupon immediately after the scanning step.

13. Apparatus as defined in any one of claims 9 - 11, wherein:
the scanner (16) includes means for scanning additional codes on the coupon to extract data pertaining to conditions of use of the coupon and other data inserted by the manufacturer to identify the coupon; and
the means for processing the coupon data at the central site (22) further includes means for generating reports for manufacturers based on data recovered from the additional codes on the coupons.

14. Apparatus as defined in claim 13, wherein the means for processing the coupon data at the central site (22) further includes:
means for processing an offer code derived from the additional codes on each coupon; and
means for generating reports based on the offer code data.

15. Apparatus as defined in claims 13 or 14, wherein the means for processing the coupon data at the central site (22) further includes:
means for further validating the coupon data based on the offer code on each coupon;
means for accumulating data relating to coupons invalidated as a result of information contained in the offer codes; and
means for adjusting billing invoices and reports to reflect invalidated coupons.

16. Apparatus as defined in any one of claims 9 - 15, wherein:
the scanner (16) includes means for scanning additional codes on the coupon to extract data pertaining to conditions of use of the coupon and other data inserted by the manufacturer to identify the coupon; and
the apparatus further includes means for detecting a triggering code in the additional data; and
means for generating a printable coupon based on the detection of a triggering code in the additional data.

## Patentansprüche

1. Verfahren zur Abrechnung und Verarbeitung von Rabattmarken, wobei das Verfahren die folgenden Schritte umfaßt:
Abtasten codierter Rabattmarken bzw. Coupons (56), die von Kunden in einem Einzelhandeisgeschäft (10) vorgelegt werden, um Daten aus den Coupons auszulesen, wobei diese Daten Daten umfassen, die ein Produkt oder eine Produktkategorie identifizieren, für die jeder Coupon verwendet werden kann, sowie Daten, die den Wert jedes Coupons angeben, wobei der Schritt des Abtastens als Bestandteil einer Kauftransaktion durchgeführt wird;
Speichern von Daten (74), die elektronische Couponeinlösungen in dem Geschäft betreffen;
Übermitteln (80) der gespeicherten Coupondaten von Zeit zu Zeit zu einem Computer an einem zentralen Standort (22), der von einem unabhängigen Couponverarbeitungsbeauftragten verwaltet wird, wobei alle Verkaufstransaktionsdaten übermittelt (80) werden, die jede Verkaufstransaktion betreffen, bei der ein Coupon vorgelegt worden ist;
Vergleichen der Coupondaten an dem zentralen Standort (22) mit zugehörigen Verkaufstransaktionsdaten, und wobei ein in den Coupondaten enthaltenes Familiencodefeld mit einem gekauften Artikel abgeglichen wird, der durch die Verkaufstransaktionsdaten identifiziert wird und den gleichen Familiencode aufweist, und wobei die Coupondaten so verarbeitet werden, daß zeitgerechte Hersteller- und Händler-Rechnungen und Berichtet vorgesehen werden;
Transport der Originalcoupons (92) zu einem Coupon-Prüfzentrum;
Prüfen eines ausgewählten Prozentsatzes der eingelösten Coupons durch einen Vergleich ausgesuchter Originalbelege mit den entsprechenden an dem zentralen Standort gespeicherten Coupondaten; und
Veranlassen der Auszahlung (150) der Händler durch die Hersteller für eingelöste und für gültig erklärte Coupons.

2. Verfahren nach Anspruch 1, wobei das Verfahren ferner die folgenden Schritte umfaßt:
Erzeugen und Verwalten einer Datenbank der Familiencodes an dem zentralen Standort (22); und
Periodisches Übermitteln von Aktualisierungen der Familiencode-Datenbank an Einzelhandelsgeschäfte, um dadurch die Quote der fehlerhaften Einlösungen in dem Schritt der Überprüfung der Coupons in den Einzelhandelsgeschäften (10) zu verringern.

3. Verfahren nach Anspruch 1 oder 2, wobei der Schritt der Verwaltung der Datenbank der Familiencodes folgende Schritte umfaßt:
Empfang von Familiencode-Aktualisierungen von Herstellern, Einzelhändlern und unabhängigen Quellen;
Feststellen möglicher Fehler des Familiencodes während dem Schritt des Überprüfens der Coupons an dem zentralen Standort (22);
Analysieren der Aktualisierungen des Familiencodes sowie möglicher Fehler in Bezug auf Einheitlichkeit; und
Aktualisieren der Familiencode-Datenbank an dem zentralen Standort (22), so daß eine höchst zuverlässige Datenbank für die fortlaufende Couponüberprüfung in den Einzelhandelsgeschäften und an dem zentralen Standort (22) vorgesehen wird.

4. Verfahren nach einem der vorstehenden Ansprüche, und wobei jede codierte Rabattmarke bzw. jeder codierte Coupon unmittelbar nach dem Schritt des Abtastens auf Gültigkeit überprüft wird.

5. Verfahren nach einem der vorstehenden Ansprüche, wobei:
der Schritt des Abtastens der codierten Rabattmarken ferner das Abtasten weiterer Codes auf dem Coupon umfaßt, um Daten auszulesen, die die Nutzungsbedingungen für den Coupon betreffen, sowie andere Daten, die der Hersteller zur Identifikation des Coupons vorgesehen hat; und
der Schritt der Verarbeitung der Coupondaten an dem zentralen Standort (22) ferner die Erstellung von Berichten für Hersteller auf der Basis der von den weiteren Codes auf den Coupons gewonnenen Daten umfaßt.

6. Verfahren nach Anspruch 5, wobei der Schritt der Verarbeitung der Coupondaten an dem zentralen Standort (22) ferner folgendes umfaßt:
Verarbeiten eines Angebotscodes, der von den weiteren Codes auf jedem Coupon abgeleitet wird; und
Erstellen von Berichten auf der Basis der Daten der Angebotscodes.

7. Verfahren nach Anspruch 5 oder 6, wobei der Schritt des Verarbeitens der Coupondaten an dem zentralen Standort (22) ferner folgendes umfaßt:
zusätzliches Bestätigen der Coupondaten auf der Basis des Angebotscodes auf jedem Coupon;
Sammeln von Daten, die Coupons betreffen, die als Folge der in den Angebotscodes enthaltenen Daten für ungültig erklärt worden sind; und
Anpassen der Rechnungen und Berichte, so daß bei diesen die für ungültig erklärten Codes berücksichtigt werden.

8. Verfahren nach einem der vorstehenden Ansprüche, wobei:
der Schritt des Abtastens das Abtasten weiterer Codes auf dem Coupon umfaßt, um Daten auszulesen, die sich auf Nutzungsbedingungen für den Coupon beziehen sowie auf andere Daten, die der Hersteller zur Identifikation des Coupons vorgesehen hat; und
wobei das Verfahren ferner die Feststellung eines Auslösecodes in den weiteren Daten umfaßt sowie die Erstellung eines druckfähigen Coupons auf der Basis der Feststellung eines Auslösecodes in den weiteren Daten.

9. Vorrichtung zur Abrechnung und Verarbeitung von Rabattmarken, wobei die Vorrichtung folgendes umfaßt:
eine Abtasteinrichtung (16) zum Abtasten codierter Rabattmarken bzw. Coupons, die von Kunden in einem Einzelhandelsgeschäft (10) vorgelegt werden, um Daten aus den Coupons auszulesen, wobei diese Daten Daten umfassen, die ein Produkt oder eine Produktkategorie identifizieren, für die jeder Coupon verwendet werden kann, sowie Daten, die den Wert jedes Coupons angeben, wobei der Schritt des Abtastens (56) als Bestandteil einer Kauftransaktion durchgeführt wird;
eine Einrichtung zum Speichern von Daten (12), die elektronische Couponeinlösungen in dem Geschäft betreffen;
eine Datenübertragungs-Verbindungseinrichtung (20) zum Übermitteln der gespeicherten Coupondaten von Zeit zu Zeit zu einem Computer an einem zentralen Standort (22), der von einem unabhängigen Couponverarbeitungsbeauftragten verwaltet wird, wobei alle Verkaufstransaktionsdaten übermittelt werden, die jede Verkaufstransaktion betreffen, bei der ein Coupon vorgelegt worden ist;
ein an dem zentralen Standort (22) vorgesehenes Datenübertragungsmodul zum Empfang von Coupondaten von mehreren Einzelhandelsgeschäften zur Validierung der Coupons, mit einer Einrichtung zum Vergleichen der Coupondaten mit zugehörigen Verkaufstransaktionsdaten, und wobei ein in den Coupondaten enthaltenes Familiencodefeld mit einem gekauften Artikel abgeglichen wird, der durch die Verkaufstransaktionsdaten identifiziert wird und den gleichen Familiencode aufweist, und mit einer Einrichtung zur Verarbeitung der Coupondaten, so daß zeitgerechte Hersteller- und Händler-Rechnungen und Berichte vorgesehen werden;
eine Einrichtung für den Transport der Originalcoupons zu einem Coupon-Prüfzentrum, und zwar nach der Überprüfung in den Einzelhandelsgeschäften (10);
eine Einrichtung zum Prüfen eines ausgewählten Prozentsatzes der eingelösten Coupons durch einen Vergleich ausgesuchter Originalbelege mit den entsprechenden an dem zentralen Standort gespeicherten Coupondaten; und
eine Einrichtung zum Veranlassen der Auszahlung der Händler durch die Hersteller für eingelöste und für gültig erklärte Coupons.

10. Vorrichtung nach Anspruch 9, wobei die Vorrichtung ferner folgendes umfaßt:
eine Einrichtung zum Erzeugen und Verwalten einer Datenbank (26) der Familiencodes an dem zentralen Standort (22); und
eine Einrichtung zum periodischen Übermitteln von Aktualisierungen der Familiencode-Datenbank an Einzelhandelsgeschäfte (10), um dadurch die Quote der fehlerhaften Einlösungen in dem Schritt der Überprüfung der Coupons in den Einzelhandelsgeschäften zu verringern.

11. Vorrichtung nach Anspruch 10, wobei die Einrichtung zum Verwalten der Datenbank (26) der Familiencodes folgendes umfaßt:
eine Einrichtung zum Empfang von Familiencode-Aktualisierungen von Herstellern, Einzelhändlern und unabhängigen Quellen;
eine Einrichtung zum Feststellen möglicher Fehler des Familiencodes während dem Schritt des Überprüfens der Coupons an dem zentralen Standort (22);
eine Einrichtung zum Analysieren der Aktualisierungen des Familiencodes sowie möglicher Fehler in Bezug auf Einheitlichkeit; und
eine Einrichtung zum Aktualisieren der Familiencode-Datenbank an dem zentralen Standort, so daß eine höchst zuverlässige Datenbank für die fortlaufende Couponüberprüfung in den Einzelhandeisgeschäften (10) und an dem zentralen Standort (22) vorgesehen wird.

12. Vorrichtung nach einem der Ansprüche 9 bis 11, wobei die Vorrichtung ferner folgendes umfaßt:
eine Einrichtung zur Validierung jeder codierten Rabattmarke bzw. jedes Coupons unmittelbar nach dem Schritt des Abtastens.

13. Vorrichtung nach einem der Ansprüche 9 bis 11, wobei:
die Abtasteinrichtung (16) ferner eine Einrichtung zum Abtasten weiterer Codes auf dem Coupon umfaßt, um Daten auszulesen, die die Nutzungsbedingungen für den Coupon betreffen, sowie andere Daten, die der Hersteller zur Identifikation des Coupons vorgesehen hat; und
die Einrichtung zur Verarbeitung der Coupondaten an dem zentralen Standort (22) ferner eine Einrichtung zur Erstellung von Berichten für Hersteller auf der Basis der von den weiteren Codes auf den Coupons gewonnenen Daten umfaßt.

14. Vorrichtung nach Anspruch 13, wobei die Einrichtung zur Verarbeitung der Coupondaten an dem zentralen Standort (22) ferner folgendes umfaßt:
eine Einrichtung zum Verarbeiten eines Angebotscodes, der von den weiteren Codes auf jedem Coupon abgeleitet wird; und
eine Einrichtung zum Erstellen von Berichten auf der Basis der Daten der Angebotscodes.

15. Vorrichtung nach Anspruch 13 oder 14, wobei die Einrichtung zum Verarbeiten der Coupondaten an dem zentralen Standort (22) ferner folgendes umfaßt:
eine Einrichtung zum zusätzlichen Bestätigen der Coupondaten auf der Basis des Angebotscodes auf jedem Coupon;
eine Einrichtung zum Sammeln von Daten, die Coupons betreffen, die als Folge der in den Angebotscodes enthaltenen Daten für ungültig erklärt worden sind; und
eine Einrichtung zum Anpassen der Rechnungen und Berichte, so daß bei diesen die für ungültig erklärten Codes berücksichtigt werden.

16. Vorrichtung nach einem der Ansprüche 9 bis 15, wobei:
die Abtasteinrichtung (16) eine Einrichtung zum Abtasten weiterer Codes auf dem Coupon umfaßt, um Daten auszulesen, die sich auf Nutzungsbedingungen für den Coupon beziehen sowie auf andere Daten, die der Hersteller zur Identifikation des Coupons vorgesehen hat; und
wobei die Vorrichtung ferner eine Einrichtung zum Feststellen eines Auslösecodes in den weiteren Daten umfaßt; und
eine Einrichtung zum Erstellen eines druckfähigen Coupons auf der Basis der Feststellung eines Auslösecodes in den weiteren Daten.

## Revendications

1. Procédé de liquidation et de traitement de coupons de remise, lequel procédé comporte les étapes consistant à :
scanner des coupons de remise (56) codés présentés par les clients dans un magasin (10), pour en extraire les données de coupon, y compris les données identifiant un produit ou une catégorie de produits pour lesquels chaque coupon peut être utilisé et des données définissant la valeur de chaque coupon, l'étape de scannage étant exécutée en tant que partie d'une transaction d'achat;
par des moyens électroniques, conserver dans le magasin les données (74) concernant les remboursements de coupon;
transmettre (80) de temps en temps les données de coupon conservées à un ordinateur situé sur un site central (22) géré par un agent indépendant de traitement de coupons, avec la transmission (80) de toutes les données de transactions de vente concernant chaque transaction de vente dans laquelle un coupon a été présenté;
au site central (22), comparer les données de coupon aux données de transaction de vente qui leur sont associées et faire correspondre un champ de code de famille compris dans les données de coupon à un article acheté identifié dans les données de transaction de vente et présentant le même code de famille, et traiter les données de coupon pour fournir en temps utile des factures et des rapports au fabricant et au détaillant;
transporter les coupons d'origine (92) à un centre de vérification des coupons;
vérifier un pourcentage sélectionné de remboursements de coupon en comparant les coupons d'origine sélectionnés à des données de coupon correspondantes conservées dans le site central; et
effectuer le paiement (150) des détaillants par les fabricants pour les coupons remboursés et validés.

2. Procédé selon la revendication 1, comportant en outre les étapes consistant à :
établir et gérer dans le site central (22) une base de données de codes de famille; et
transmettre périodiquement des mises à jour de la base de données des codes de famille aux magasins de détail, pour réduire le taux de remboursement erronés au cours de l'étape de validation des coupons dans les magasins de détail (10).

3. Procédé selon les revendications 1 ou 2, dans lequel l'étape de gestion de la base de données des codes de famille comprend les étapes consistant à :
recevoir des mises à jour des codes de famille des fabricants, des détaillants et de sources indépendantes;
localiser d'éventuelles erreurs de code de famille pendant l'étape de validation des coupons au site central (22);
analyser les mises à jour des codes de famille et vérifier les éventuelles erreurs d'incohérence; et
mettre à jour la base de données de codes de famille au site central (22) pour fournir une base de données très fiable pour la poursuite de la validation des coupons dans les magasins de détail et au site central (22).

4. Procédé selon l'une quelconque des revendications précédentes, dans lequel chaque coupon de remise codé est validé immédiatement après l'étape de scannage.

5. Procédé selon l'une quelconque des revendications précédentes, dans lequel :
l'étape de scannage des coupons de remise codés comprend en outre le scannage de codes supplémentaires prévus sur le coupon, pour extraire des données concernant les conditions d'utilisation du coupon et d'autres données insérées par le fabricant en vue d'identifier le coupon; et
l'étape de traitement des données de coupon au site central (22) comporte en outre la création de rapports pour les fabricants, sur base des données récupérées sur les codes supplémentaires prévus sur les coupons.

6. Procédé selon la revendication 5, dans lequel l'étape de traitement des données des coupons au site central (22) comprend en outre les étapes consistant à :
traiter un code d'offre dérivé des codes supplémentaires prévus sur chaque coupon; et
créer des rapports sur base des données de code d'offre.

7. Procédé selon les revendications 5 ou 6, dans lequel l'étape de traitement des données de coupon au site central (22) comprend en outre les étapes consistant à :
valider également les données de coupon sur base du code d'offre prévu sur chaque coupon;
accumuler des données concernant les coupons non validés suite aux informations contenues dans les codes d'offres; et
ajuster les factures et les rapports en tenant compte des coupons non validés.

8. Procédé selon l'une quelconque des revendications précédentes, dans lequel :
l'étape de scannage comprend le scannage de codes supplémentaires prévus sur le coupon, pour en extraire des données concernant les conditions d'utilisation du coupon et d'autres données insérées par les fabricants en vue d'identifier le coupon; et
le procédé comportant en outre l'étape consistant à détecter un code de déclenchement dans les données supplémentaires et à créer un coupon imprimable sur base de la détection d'un code de déclenchement dans les données supplémentaires.

9. Appareil de liquidation et de traitement de coupons de remise, comprenant :
un scanner (16) pour scanner des coupons de remise codés présentés par des clients dans un magasin de détail (10), pour en extraire des données de coupon, qui comprennent des données identifiant un produit ou une catégorie de produits pour lequel chaque coupon peut être utilisé et des données définissant la valeur de chaque coupon, l'étape de scannage (56) étant exécutée en tant que partie d'une transaction d'achat;
un moyen pour, par des voies électroniques, conserver dans le magasin (10) des données (12) concernant les remboursements de coupon;
une liaison de communication (20) pour transmettre périodiquement les données de coupon conservées à un ordinateur situé sur un site central (22) géré par un agent indépendant de traitement de coupon, lesquelles données comprennent toutes les données de transaction de vente concernant chaque transaction de vente dans laquelle un coupon a été présenté;
au site central (22), un module de communication pour recevoir des données de coupon de plusieurs moyens de validation de coupon situés dans les magasins de détail, y compris des moyens pour comparer les données de coupon avec les données de transaction de vente qui leur sont associées et faire correspondre un champ de code de famille compris dans les données de coupon à un article acheté identifié par les données de transaction de vente et présentant le même code de famille, et un moyen de traitement des données de coupon pour fournir en temps utile des factures et des rapports au fabricant et au détaillant;
un moyen de transport des coupons d'origine à un centre de vérification de coupon après validation dans les magasins de détail (10);
un moyen de vérification d'un pourcentage sélectionné de remboursement de coupon par comparaison des coupons d'origine sélectionnés à des données de coupon correspondantes conservées au site central; et
un moyen pour effectuer le paiement des détaillants par les fabricants pour les coupons remboursés et validés.

10. Appareil selon la revendication 9, comprenant en outre :
un moyen pour établir et gérer une base de données (26) de codes de famille au site central (22); et
un moyen pour transmettre périodiquement des mises à jour de la base de données de codes de famille à des magasins de détail (10), pour réduire les taux de remboursement erronés au cours de l'étape de validation des coupons dans les magasins de détail.

11. Appareil selon la revendication 10, dans lequel le moyen de gestion de la base de données (26) de code de famille comprend :
un moyen pour recevoir des mises à jour de codes de famille des fabricants, des détaillants et de sources indépendantes;
un moyen permettant de localiser d'éventuelles erreurs de code de famille pendant l'étape de validation des coupons au site central (22);
un moyen pour analyser les mises à jour des codes de famille et les éventuelles erreurs de cohérence; et
un moyen pour la mise à jour de la base de données de codes de famille au site central, pour fournir une base de données très fiable pour la poursuite de la validation des coupons dans les magasins de détail (10) et au site central (22).

12. Appareil selon l'une quelconque des revendications 9 à 11, comprenant en outre :
un moyen pour valider chaque coupon de remise codé immédiatement après l'étape de scannage.

13. Appareil selon l'une quelconque des revendications 9 à 11, dans lequel :
le scanner (16) comprend un moyen pour scanner des codes supplémentaires prévus sur le coupon, pour extraire des données concernant les conditions d'utilisation du coupon et d'autres données insérées par le fabricant en vue d'identifier le coupon; et
le moyen de traitement des données de coupon au site central (22) comprend en outre un moyen pour créer des rapports pour les fabricants, sur base des données récupérées à partir des codes supplémentaires prévus sur le coupon.

14. Appareil selon la revendication 13, dans lequel le moyen de traitement des données de coupon au site central (22) comprend en outre :
un moyen pour traiter un code d'offre dérivé des codes supplémentaires prévus sur chaque coupon; et
un moyen pour créer des rapports sur base des données de codes d'offres.

15. Appareil selon les revendications 13 ou 14, dans lequel le moyen de traitement de données de coupon au site central (22) comprend en outre :
un moyen pour valider également les données de coupon sur base du code d'offre prévu sur chaque coupon;
un moyen pour accumuler des données concernant les coupons non validés suite aux informations contenues dans les codes d'offres; et
un moyen pour ajuster les factures et les rapports en tenant compte des coupons non validés.

16. Appareil selon l'une quelconque des revendications 9 à 15, dans lequel :
le scanner (16) comprend un moyen de scannage de codes supplémentaires sur le coupon en vue d'extraire des données concernant les conditions d'utilisation du coupon et d'autres données insérées par le fabricant en vue d'identifier le coupon; et
l'appareil comprenant en outre un moyen pour détecter un code de déclenchement dans les données supplémentaires; et
un moyen pour créer un coupon imprimable sur base de la détection d'un code de déclenchement dans les données supplémentaires.
